Europäisches Patentamt

European Patent Office

Office européen des brevets

(19)

(11) Publication number : **0 442 685 A1**

# EUROPEAN PATENT APPLICATION

(12)

(21) Application number : 91301087.2

(51) Int. Cl.⁵ : **H04N 17/04**

(22) Date of filing : **11.02.91**

(30) Priority : **14.02.90 JP 33382/90**

(43) Date of publication of application :
**21.08.91 Bulletin 91/34**

(84) Designated Contracting States :
**DE ES GB**

(71) Applicant : **SONY CORPORATION**
**7-35 Kitashinagawa 6-Chome Shinagawa-ku**
**Tokyo 141 (JP)**

(72) Inventor : **Yoshiki, Nakagawa, c/o Patents**
**Division**
**Sony Corporation 6-7-35 Kitashinagawa**
**Shinagawa-ku Tokyo 141 (JP)**

(74) Representative : **Thomas, Christopher Hugo et**
**al**
**D Young & Co 10 Staple Inn**
**London WC1V 7RD (GB)**

(54) **Method and system for measurement of characteristics of image display.**

(57)    A method for measurement of characteristics of image display includes a step of an arangement of an axis of face plane of a display and an axis of light detector with predetermined angle obliquity. A predetermined image is displayed on said face plane of a display. The displayed image is picked-up by means of a light detector. Based on the picked-up image which is oblique to axis of the light detector, characteristics of the display is derived.

EP 0 442 685 A1

FIG. 1

# METHOD AND SYSTEM FOR MEASUREMENT OF CARACTERISTICS OF IMAGE DISPLAY

## BACKGROUND OF THE INVENTION

### Field of the Invention

The present invention relates to a method and system for measuring display characteristics, such as convergence, focus and so forth, of an image display, such as a color television set and so forth.

### Description of the Background Art

In the prior art, measurement of convergence point and focus of color television sets have been performed by setting a color video camera (hereafter simply referred to as "camera" in front of a display screen, displaying specific dot or dots on the display screen, and picking up video image of the dot or dots by means of the camera. The specific dot or dots to be displayed on the display screen will be hereafter referred to as "test dots"

As is well known, a color cathode ray tube (CRT) employed as color display of the color television set, has a plurality of vertical fluorescent stripes arranged in parallel relationship to each other in horizontal direction. On the other hand, the modern video camera employs an image pick-up device comprising a photo cell array with a plurality of photo cells arranged on the matrix. In the measurement, the plain of the photo cell array of the image pick-up device is oriented in parallel relationship with the plain on which the fluorescent strips are arranged so that vertical and horizontal coordinate axes of the image pick-up device can be oriented in parallel relationship to that of the coordinate axes of the CRT screen.

As set forth, the CRT display screen is formed by a plurality of fluorescent strips arranged horizontally parallel relationship, interval of pixels in horizontal direction becomes greater than that in the vertical direction. Therefore, when the image of test dots are picked-up by means of the image pick-up device of the camera, number of samples in horizontal direction can be smaller than that in vertical direction with wider interval between horizontally aligned samples. Interference can be caused between spatial frequency of the displayed dot image and the spatial frequency of picked-up image. This interference may encounters a problem of fluctuation of convergence point derivation depending upon the sampling timing.

In order to improve this, an optical filter is disposed between the display screen and the camera so as to lower sharpness of the image to be picked-up and thus minimize optical interference. In such case, the output level of the picked-up image becomes lower, or the range of measurement can be narrowed. Furthermore, since the measurement is taken place not for the live image displayed on the display screen, distortion of the image on the optical filter may influence for the result of measurement and thus can lower accuracy of measurement.

## SUMMARY OF THE INVENTION

Therefore, it is an object of the present invention to provide a display characteristics measurement with avoiding influence of optical interference between spatial frequencies and without causing degradation of accuracy of measurement.

According to one aspect of the invention, a method for measurement of characteristics of image display comprises the steps of :

a step of an arrangement of an axis of face plane of a display and an axis of light detector with predetermined angle obliquity ;

a step of displaying an image for measurement on said face plane of a display ;

a step of taking image of said image of measurement by said light detector ;

a step of measurement of characteristics of said display based on said image of measurement taken by said image detector.

According to another aspect of the invention, a measurement apparatus of a characteristics of image display comprises :

an image detector being so arranged as to orient the axes thereof in oblique to axes of a display means;

an image processing apparatus being supplied the taken image by said image detector and measuring characteristics of said display.

The measurement apparatus may further comprise a camera incorporating said image detector. The image processing means may comprise CPU, an image memory and an analog-to-digital converter. In addition, the measurement apparatus may further comprise a color television receiver to be measured, and a display for displaying the result of measurement supplied from said image processing apparatus. Furthermore, the measurement apparatus may further comprise a result display displaying a result data supplied from said image processing apparatus, which result display is provided as external unit of said display to be measured. The result display may be LED display apparatus.

## BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings :

Fig. 1 is a block diagram of a display characteristics measuring system according to the present invention ;

Fig. 2 is an explanatory illustration of layout of a display screen of an image display, an image pick-up device in a camera and content of an image memory ;

Figs. 3A and 3B are illustration of picked-up image at the image pick-up device in the prior art and the preferred embodiment ;

Fig. 4 is a chart showing luminance levels of respective color channel signals ; and

Fig. 5 is an illustration showing angular relationship between the image display and the image pick-up device.

## DESCRIPTION OF THE PREFERRED EMBODIMENT

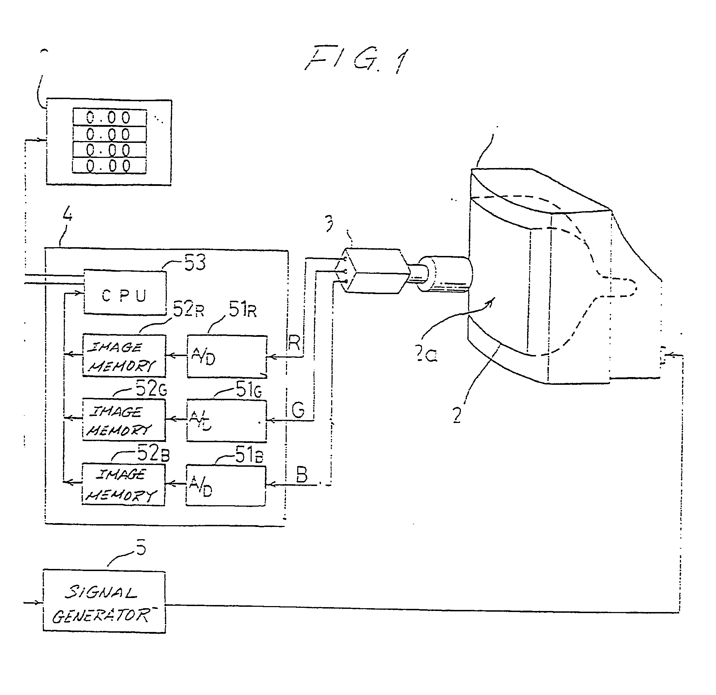

Referring now to the drawings, particularly to Fig. 1, the preferred embodiment of the display characteristics measuring system, according to the present invention, will be discussed herebelow in terms of measurement of convergence. In the shown embodiment, an image display 1 comprises a color television receiver (hereinafter TV). The TV 1 includes a color cathode ray tube (hereinafter "CRT") 2 with a display screen 2a. A color video camera 3 is placed in opposition to the display screen 2a of the CRT 2. As is well known, the camera 3 has an image pick-up device which comprises a plurality of photo cell arranged in the matrix on a camera coordinate system. As can be seen from Fig. 1, the camera 3 is oriented so that the axes of the camera coordinate system is oriented in oblique to the axes of the display coordinate system on the display screen.

The camera 3 picks-up white dot or while line images displayed on the display screen 2a and feeds respective of RGB-channel color signals. Respective of color channel color signals are fed to an image processing apparatus 4. For generating while dot or line images, the TV 1 is connected to a signal generator 5 which is, in turn, connected to the image processing apparatus. The signal generator 5 is responsive to a command for while dot or line image to generate video signal representative thereof. The image processing apparatus 4 is also connected to a LED display apparatus which is designed for displaying measured convergence magnitude.

The image processing apparatus 4 includes analog-to-digital (A/D) converters 51R, 51G and 51B respectively designed for converting analog color signals of the corresponding color channel into digital signals. A/D converters 51R, 51G and 51B are respectively connected to image memories 52R, 52G and 52B which store respective color channel of digital signals. The image processing apparatus 4 also includes a microprocessor (as labeled "CPU") 53. The microprocessor 53 reads out the stored each color channel of digital signals to derive convergence magnitude. The microprocessor 53 outputs convergence indicative data to the LED display apparatus 6.

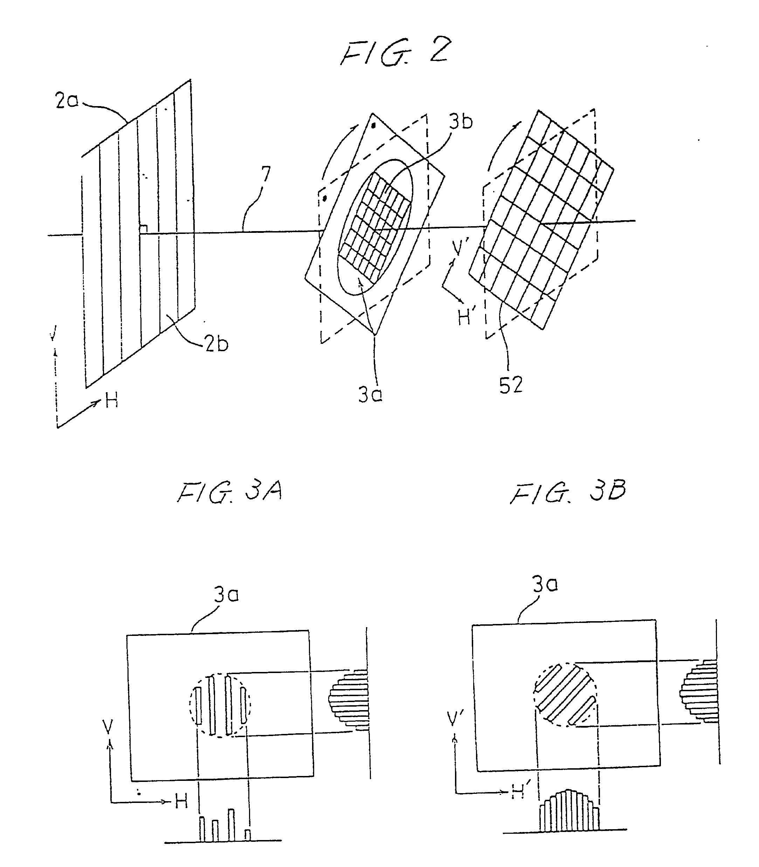

As set forth, the camera 3 is inclined to orient the camera coordinate axes in oblique with respect to the display coordinate axes. Magnitude of obliquity of the camera coordinate system relative to the display coordinate system is approximately 45°, as shown in Fig. 2.

Fig. 2 shows relationship between the display coordinate system and the camera coordinate system. In Fig. 2, the element identified by the reference numeral 2a is part of the display screen with a plurality of vertical fluorescent stripes 2b. Each individual fluorescent stripe 2b is designed to one of the color channel image. The fluorescent stripes of R-, G- and B-channels are arranged alternatively in a given order. On the other hand, the element identified by the reference numeral 3a represents an image pick-up device, such as CCD. The image pick-up device 3a includes a plurality of photo cells 3b arranged in a form of matrix to form an array. The plain of the image pick-up device 3a is disposed in perpendicular to the normal 7 of the plain of the display screen 2a. As set forth, the coordinate system of the image pick-up device 3a is inclined with respect to the display coordinate system formed on the plain of the display screen, in clockwise direction in an angular magnitude of approximately 45°.

In Fig. 2, the reference numeral 52 denotes an image memory for storing image data picked-up by the camera 3. Since the image pick-up device coordinate system is oriented in oblique to the display coordinate system, the image data stored in the image memory 52 represents oblique image.

It should be appreciated, though the shown embodiment proposes orienting the camera in inclined fashion to achieve relative obliquity of the image pick-up device coordinate system and the display coordinate system, it may be possible to incline only the image pick-up device in the camera. Furthermore, it is also possible to incline the display screen of the TV while the camera is maintained in vertical position. Therefore, it is only essential to establish relative orientation between the display coordinate system and the image pick-up device coordinate system oblique to each other.

Measurement of the convergence is performed through the following process steps.

(1) Initially, at the orientation opposing to a selected portion of CRT display screen 2a, the camera 3 is placed in opposition thereto. As set forth above, the the coordinate system of the image pick-up device 3a of the camera is oriented in oblique in a predetermined angle relative to the display coordinate system on the display screen.

(2) The signal generator 5 is operated to generate video signal representative of predetermined image, such as white dot image, for displaying the predetermined image on the predetermined coordinate position on the display coordinate system.

(3) The displayed image on TV 1 is detected by the camera and picked-up the color video image. Based on the picked-up video image, respective of R-, G- and B-Channels of color signals are fed to the image processing apparatus 4.

(4) Respective of the R-, G- and B-Channels color signals input to the image processing apparatus 4 are A/D converted by the A/D converters 51R, 51G and 51B and then stored in the image memories 52R, 52G and 52B. Then, the data stored in the image memories 52R, 52G and 52B are read out and processed in CPU 53 to derive convergence points with respect to respective of R-, G- and B-Channels data.

(5) Then, the resultant convergence point representative data are fed to the display apparatus to display the derived convergence magnitude.

Assuming that the relative inclination angle of the image pick-up device coordinate system relative to the display coordinate system is θ, the coordinate system of image memory is identified as H' and V' and the display coordinate system is identified as H, V, the displace coordinate system can be expressed by the following matrix :

$$\begin{array}{c} H \\ V \end{array} = \begin{array}{cc} \cos\theta \cdot \sin\theta \\ -\sin\theta \cdot \cos\theta \end{array} \quad \begin{array}{c} H' \\ V' \end{array}$$

Figs. 3A and 3B are explanatory illustration showing the conventional manner of derivation of convergence point and the manner according to the invention. Fig. 3A shows the example in such the coordinate axes of the image pick-up device is oriented in parallel relationship to the coordinate axes of the display coordinate system. The bar graphs represents sum of luminance level in horizontal and vertical directions. On the other hand, Fig. 3B shows the sample image picked-up in a condition that the coordinate system of the image pick-up device is included approximately 45° relative to the display coordinate system. Fig. 3B also illustrates the outlet level of image pick-up device 3a as sum of luminance level in vertical and horizontal direction H and V.

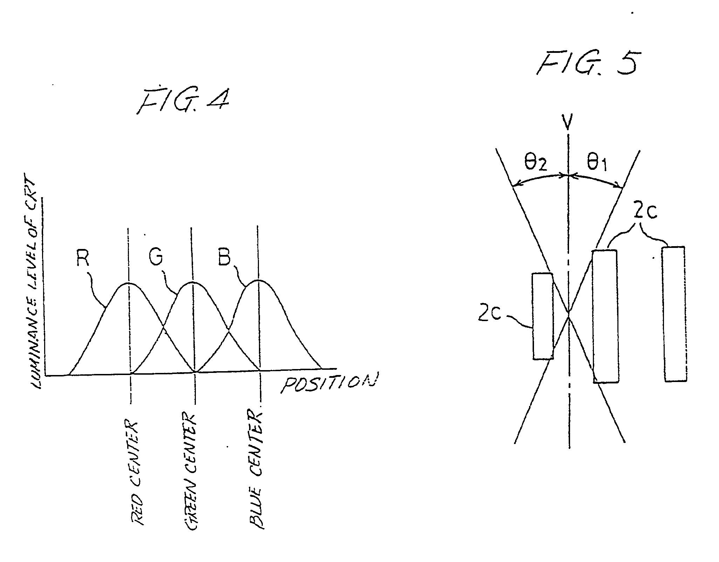

As can be appreciated, the convergence is an item of measurement directed to position difference of R-, G- and B-Channels images. Fig. 4 illustrates distribution of sum of luminance level in each color channel of output data stored on the image memories 52R, 52G and 52B either in vertical or horizontal direction.

As set forth above, fluorescent strips for reproducing respective of R-, G- and B-Channels images are alternatively arranged on the display screen in the given order. According to decreasing of number of samples, interference of the intervals with the sampling frequency can be arisen to cause fluctuation of the sampled value. Therefore, the horizontal distribution of sum of luminance in the vertical direction becomes unstable. As a result, repeating accuracy becomes unstable. On the other hand, the vertical distribution of the sum of the luminance level in the horizontal direction direction can be obtained sufficiently high accuracy. In contrast to this, according to the shown embodiment, since the coordinate system of the image pick-up device is oriented in oblique in the angle of approximately 45 ° , the horizontal internal of the samples can be successfully compensated. This avoids interference of the spatial frequencies. Therefore, the sum of the luminance level in horizontal and vertical directions becomes equivalent to each other and becomes stable. As a result measurement of convergence becomes satisfactorily accurate.

It should be appreciated that though the shown embodiment selects the inclination of the image pick-up device coordinate system relative to the display coordinate system is set approximately 45° , the inclination can be selected in any angles as far as the images of adjacent stripes overlap both in vertical and horizontal directions. In view of this the preferred inclination of the image pick-up device is to be greater than or equal to $\theta_1$ in leftward direction and greater than or equal to $\theta_2$ in rightward direction.

While the present invention has been discussed in terms of the preferred embodiment of the invention, the invention should be understood to be implemented in various fashion and for various measurement of the image display characteristics. Therefore, the invention should be understood to include all possible embodiments and modifications which can be implemented without departing from the principle of the invention set out in the appended claims.

For instance, through the shown embodiment is directed to measurement of convergence, the invention is also applicable for measuring focus, distortion of display image, landing and so forth.

**Claims**

1. A method for measurement of characteristics of image display comprising the steps of :

a step of an arrangement of an axis of face plane of a display and an axis of light detector with predetermined angle obliquity ;

a step of displaying an image for measurement on said face plane of a display ;

a step of taking image of said image of measurement by said light detector ;

a step of measurement of characteristics of said display based on said image of measurement taken by said image detector.

2. A measurement apparatus of a characteristics of image display comprising :

an image detector being so arranged as to orient the axes thereof in oblique to axes of a display means ;

an image processing apparatus being supplied the taken image by said image detector and measuring characteristics of said display.

3. A measurement apparatus as set forth in claim 2, which further comprises a camera incorporating said image detector.

4. A measurement apparatus as set forth in claim 2, wherein said image processing means comprises CPU, an image memory and an analog-to-digital converter.

5. A measurement apparatus as set forth in claim 2, which further comprises a color television receiver to be measured, and a display for displaying the result of measurement supplied from said image processing apparatus.

6. A measurement apparatus as set forth in claim 2, which further comprises a result display displaying a result data supplied from said image processing apparatus, which result display is provided as external unit of said display to be measured.

7. A measurement apparatus as set forth in claim 6, wherein said result display is LED display apparatus.

FIG. 1

# FIG. 2

# FIG. 3A

# FIG. 3B

FIG. 4

FIG. 5

LUMINANCE LEVEL OF CRT

R    G    B

POSITION

RED CENTER

GREEN CENTER

BLUE CENTER

V

$\theta_2$    $\theta_1$

2C

2C